(19) Europäisches Patentamt
European Patent Office
Office européen des brevets

(11) **EP 1 998 326 A1**

(12) **EUROPEAN PATENT APPLICATION**

(43) Date of publication:
**03.12.2008 Bulletin 2008/49**

(51) Int Cl.:
*G11B 7/013* (2006.01)     *G11B 7/26* (2006.01)

(21) Application number: **08156107.8**

(22) Date of filing: **13.05.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **31.05.2007 JP 2007145269**

(71) Applicant: **Kabushiki Kaisha Toshiba
Minato-ku,
Tokyo 105-8001 (JP)**

(72) Inventor: **Ootera, Yasuaki
c/o Toshiba Corp. IP Division
Tokyo 105-8001 (JP)**

(74) Representative: **Henkel, Feiler & Hänzel
Patentanwälte
Maximiliansplatz 21
80333 München (DE)**

(54) **Optical disk, optical disk mastering method and optical disk playback apparatus**

(57)     In an optical disk according to one embodiment of this invention, the actual shortest mark length recorded on the optical disk is set equal to or smaller than $L_{n0T} \times 0.6$ when the shortest mark length calculated based on a reference clock is $L_{n0T}$. The optical disk generates a playback signal suitably used for a playback apparatus that plays back information by use of a PRML method, for example.

FIG. 6A

EP 1 998 326 A1

F I G. 6B

Laser light

## Description

This invention relates to an optical disk and more particularly to the shapes of information pits formed on an optical disk.

Uneven portions called pits are notched in a transparent formation substrate in portions in which data is previously recorded, for example, in a preformat portion of a ROM disk or RAM disk in an optical disk. Such pits are applied with laser light via the formation substrate of approximately 0.6 mm thickness and read according to the intensity of reflected light.

The sizes of the pits are changed according to recording information and are set in an order of submicrons. In order to precisely form pits as small as possible, it is important to enhance the recording density of the optical disk.

For example, in the present DVD-ROM, the minimum pit length (circumferential size) is 0.40 $\mu$m, the pit depth is approximately 100 nm and the pit is formed in a truncated cone form having a flat bottom surface. In the conventional DVD, the time length of each pit is read by slicing (binary-coding) a playback waveform by use of a preset threshold value and information is played back by converting the time length into data. In order to precisely play back information with the above method, it is necessary to stably set the pit length, attain sufficiently large signal amplitude so as to be sliced and set small asymmetry that is determined based particularly on a difference between the central level of a playback signal of the shortest pit and the central level of a playback signal of the longest pit.

Recently, an optical disk such as an HD DVD, BD (Blu-ray Disc) whose capacity is increased in comparison with that of the conventional DVD is developed. The HD DVD is a disk obtained by laminating the recording surfaces of two substrates of 0.6 mm thickness one or each of which has a recording surface having information recorded thereon as in the conventional DVD. The recorded information is played back by use of a PRML (Partial Response and Maximum Likelihood) system that converts the amplitude of the pit playback signal waveform into a multi-value and decodes the same. The BD is a disk obtained by forming a cover layer of approximately 0.1 mm thickness on the recording surface side of a substrate of 1.1 mm thickness having a single-layered or double-layered recording surface on one side. The recorded information is played back by use of a binary-coding method that slices a pit playback signal waveform by use of threshold voltage and binary-codes the sliced waveform. In Jpn. Pat. Appln. KOKAI Publication No. 2006-65942, pit shapes used to simplify information playback of a disk such as a BD whose recording capacity is relatively large are disclosed.

In recent years, a master disk recording apparatus (the apparatus is described as a next-generation master disk recording apparatus in the present application) that manufactures disks having recording capacities extremely larger than those of the HD DVD and BD are developed. As the above next-generation master disk recording apparatus, an apparatus that uses an electron beam as a recording light source or applies a thermal recording process by a laser is provided and it is estimated that information of several hundred GB can be recorded.

When an optical disk is manufactured by use of the next-generation master disk recording apparatus, the tilts of the pit wall surfaces become steep, the playback signal amplitude of the shortest mark becomes relatively large and the asymmetry of the shortest mark is set to a large value. Since the PRML system is used to convert the amplitude of the playback signal waveform into a multi-value and play back information, it is preferable to set the asymmetry of the playback signal as small as possible. Therefore, it may become difficult to play back information by use of the PRML system in some cases in the disk manufactured by use of the next-generation master disk recording apparatus. In Jpn. Pat. Appln. KOKAI Publication No. 2006-65942 described above, the technique for manufacturing optical disks by use of the next-generation master disk recording apparatus is not described at all.

Therefore, an object of this invention is to provide an optical disk which is manufactured by use of a next-generation master disk recording apparatus and in which the asymmetry of the playback signal is set to a small value that permits information to be stably played back.

An optical disk according to a first aspect of the present invention has a feature that the actual shortest mark length recorded on the optical disk is set equal to or smaller than $L_{n0T} \times 0.6$ when the shortest mark length calculated based on a reference clock is set to $L_{n0T}$.

According to the present invention, there is provided an optical disk which is manufactured by use of a next-generation master disk recording apparatus and in which the asymmetry of the playback signal is set to a small value that permits information to be stably played back. For example, the optical disk is suitably played back by use of a playback apparatus that plays back information by use of a PRML system.

The invention can be more fully understood from the following detailed description when taken in conjunction with the accompanying drawings, in which:

FIGS. 1A and 1B are a view showing mark shapes of an optical disk manufactured by use of a conventional optical master disk recording apparatus.
FIG. 2 is a diagram showing a signal playback waveform of an optical disk manufactured by use of the conventional optical master disk recording apparatus.
FIGS. 3A and 3B are a view showing mark shapes of an optical disk on which marks are recorded at substantially the same beam application timing as that of the disk of FIG. 1 by use of a next-generation master disk recording apparatus.

FIG. 4 is a diagram showing a playback signal waveform of the optical disk shown in FIG. 3.

FIG. 5 is a diagram showing a difference between the pit wall angles of optical disks manufactured by use of the conventional master disk recording apparatus and next-generation master disk recording apparatus.

FIGS. 6A and 6B are a view showing mark shapes of an optical disk according to a first embodiment of this invention.

FIG. 7 is a view showing marks (solid-line circle and ellipses) of 2T to 11T formed according to the present embodiment.

FIG. 8 is a process view showing an optical disk manufacturing method according to the present embodiment.

FIG. 9 is a diagram showing a surface AFM (Atomic Force Microscope) image of an optical disk.

FIG. 10 is a block diagram showing the configuration of an optical disk device according to the present embodiment.

There will now be described an embodiment of the present invention with reference to the accompanying drawings.

In the present embodiment, it is supposed that the diameter of an optical disk is 120 mm, the thickness is 1.2 mm (a laminator of two substrates with 0.6 mm thickness) and the optical disk is a playback-only HD DVD-ROM disk. However, this invention is not limited to this type of disk and can be applied to the pre-pit portion of a recordable R disk or RAM disk, a disk formed by attaching a cover layer of 0.1 mm thickness on a substrate of 1.1 mm thickness like a BD or a disk having larger (or smaller) pit size like a CD-ROM or DVD-ROM.

The range of mark length $Ln_0T$ of the shortest mark $n_0T$ calculated based on a reference clock is set to 0.17 $\mu$m to 0.21 $\mu$m. For example, in the case of the present HD DVD, the period T of the reference clock is set to 0.102 $\mu$m when it is expressed by use of the length on the disk. Since the shortest mark is 2T (n=2), the length thereof is set to 0.204 $\mu$m (=2x0.102 $\mu$m) and is contained in the above mark length range. Further, it is supposed that the disk is played back by use of a laser light beam spot of 0.34 to 0.63 $\mu$m. The range of beam spots contains a range of playback beam spots of the present HD DVD playback apparatus.

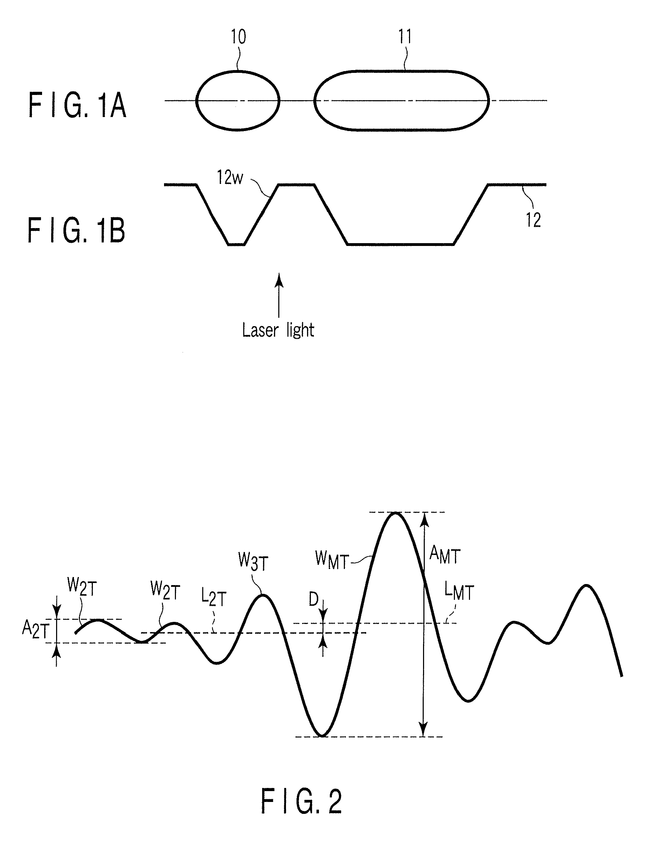

FIG. 1 shows mark shapes of an optical disk manufactured by use of a conventional optical master disk recording apparatus, FIG. 1A is a bird's eye view and FIG. 1B is a cross-sectional view. FIG. 2 is a diagram showing a signal playback waveform of an optical disk manufactured by use of the conventional optical master disk recording apparatus. In an optical disk, particularly, in a pre-recorded disk such as a playback-only optical disk, pit-shaped marks shown in FIG. 1 are generally recorded and recorded information is read by use of laser light. The laser light is made incident on the optical disk in a direction indicated by an arrow shown in FIG. 1 and is reflected from a reflection surface 12 and information is read based on the intensity of reflected light.

A reference symbol 10 in FIG. 1A indicates the shortest mark (2T mark) and 11 indicates another mark. In an optical disk manufactured by use of the conventional optical master disk recording apparatus, more specifically, a master disk recording apparatus using a laser with the wavelength of 266 nm or less as a recording light source, the resolution of an exposure light source is not sufficiently high in comparison with the pit size. Therefore, the tilt of the pit wall surface 12w does not become steep and it is particularly difficult to form the cross section of the shortest mark in a rectangular form. In this case, the amplitude of the playback signal from the shortest mark becomes smaller and the level thereof is shifted to a high level side. As a result, as shown in FIG. 2, the asymmetry becomes small and this is preferable in an optical disk using the PRML method for decoding information (refer to Jpn. Pat. Appln. KOKAI Publication No. 2004-127468).

In FIG. 2, it is supposed that W2T indicates a playback signal waveform of a 2T code pit (shortest pit), W3T indicates a playback signal waveform of a 3T code pit, WMT indicates a playback signal waveform of the longest code pit, A2T indicates the amplitude of a 2T code pit playback signal, AMT indicates the amplitude of the longest code pit playback signal, L2T indicates the central level of the 2T code pit playback signal waveform, LMT indicates the central level of the longest code pit playback signal waveform, and D indicates a level difference (LMT-L2T) obtained by subtracting the central level L2T from the central level LMT.

The asymmetry can be defined for each code pit playback signal, but in the present embodiment, the asymmetry of the 2T code that is the most important is used if it is not specifically explained. That is, in this example, it is supposed that the asymmetry is set to a value (D/AMT) obtained by dividing the level difference D by the amplitude AMT of the playback signal waveform of the longest code pit.

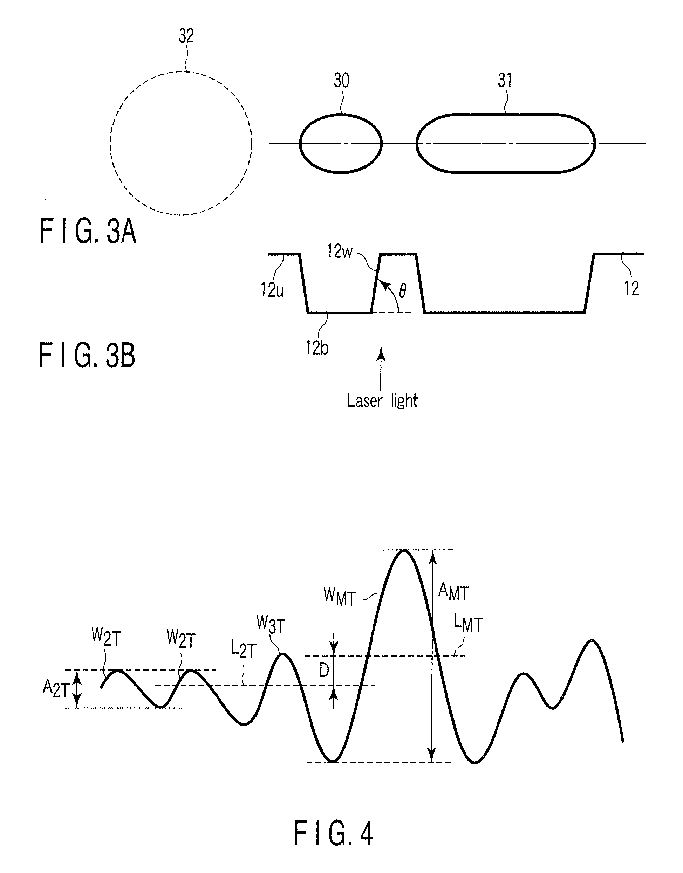

FIG. 3 is a pit cross-sectional view of an optical disk on which pits are formed at substantially the same beam application timing as that of the disk of FIG. 1 by use of a next-generation master disk recording apparatus and FIG. 4 shows a playback signal waveform of the optical disk shown in FIG. 3.

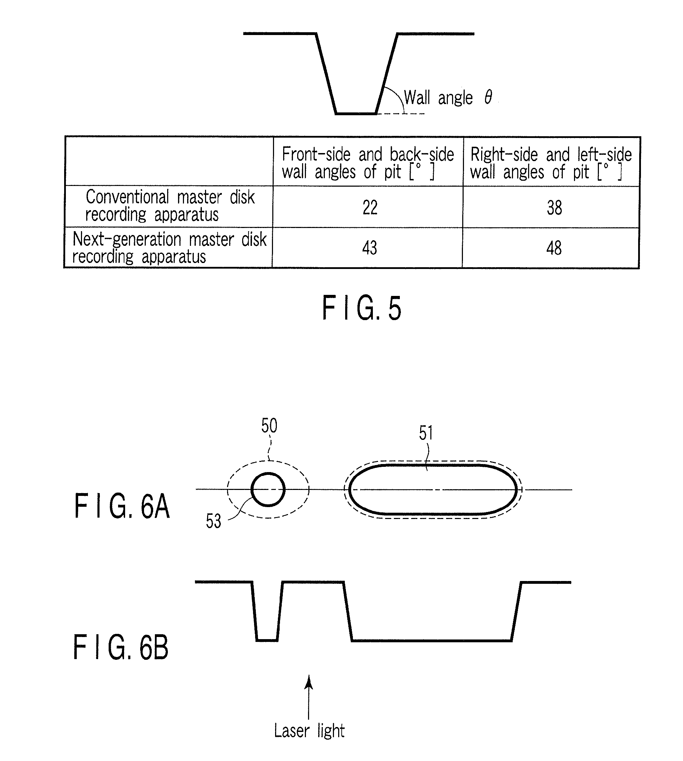

In FIG. 3, a reference symbol 30 denotes the shortest mark, 31 shows another mark and 32 denotes a playback beam spot. When an optical disk is manufactured by use of a next-generation master disk recording apparatus, more specifically, an apparatus using an electron beam as a recording light source or utilizing a thermal recording process by a laser, the wall angle θ of the pit wall surface 12w becomes large (steep) and the shortest mark can be formed as a pit with a cross section sufficiently closer to a rectangular form since the resolution of the recording apparatus is sufficiently high. The difference between the pit wall angles of disks formed by use of the conventional master disk recording apparatus and next-generation master disk recording apparatus is shown in FIG. 5. The front-side and back-side wall angles of a pit formed by the conventional master disk recording apparatus are approximately 22° and the right-side and left-side wall angles thereof are approximately 38°. On the other hand, the front-side and back-side wall angles of a pit formed by the next-generation master disk recording apparatus are approximately 43° and the right-side and left-side wall angles thereof are approximately 48°. By taking a variation in the recording apparatus and measurement precision into consideration, the wall angles in the case of the next-generation master disk recording apparatus shown in FIG. 5 each have a range of approximately ±5%. Since the tilts of the above walls become steep, the bottom surface 12b of the reflection surface 12 becomes larger in comparison with a conventional case even in marks with the same mark length if disks are manufactured by use of the next-generation master disk recording apparatus.

When the next-generation master disk recording apparatus is used, the amplitude A2T of the shortest mark generally becomes larger as shown in FIG. 4. However, the central level L2T of a playback signal of the shortest mark is set lower than a conventional case and the asymmetry is set to a larger value. Therefore, the thus manufactured disk is not suitably used for playback of information by the PRML method in which the amplitude of the playback signal waveform is converted into a multi-value and decoded (and therefore, which is sensitive to the asymmetry). The phenomenon occurs not only in the case of the shortest mark, but also may occur in the case of a mark having the diameter smaller than the playback beam spot diameter of the playback drive in some cases.

The reason why the asymmetry is set to a large value when the next-generation master disk recording apparatus is used is explained with reference to FIG. 3. A playback light beam 32 is focus-controlled to set the focus point near the upper surface 12u of the reflection surface 12. Since light incident on the upper surface 12u is totally reflected, the reflected light level is high. However, the reflected light of light incident on the bottom surface 12b interferes with the reflected light from the upper surface 12u and the reflected light level becomes low. That is, the reflected light only from the upper surface 12u becomes a high-level signal and the reflected light from the bottom surface 12b becomes a low-level signal. The area of the playback beam spot 32 is generally larger than that of the shortest pit 30. Further, as described before, when the next-generation master disk recording apparatus is used, the bottom surface 12b becomes larger than in the conventional case even in marks with the same mark length.

Therefore, even when the same shortest marks are played back, the central level of the playback signal of the shortest mark manufactured by use of the next-generation master disk recording apparatus shown in FIG. 3 becomes lower than the central level of the playback signal of the shortest mark manufactured by use of the conventional master disk recording apparatus shown in FIG. 1. As a result, the asymmetry becomes large. As in the present HD DVD playback apparatus, when the playback beam spot diameter is set to two to three times the shortest mark length, a phenomenon that the asymmetry becomes large significantly appears.

FIG. 6 is a cross-sectional view showing mark shapes of an optical disk according to one embodiment of this invention.

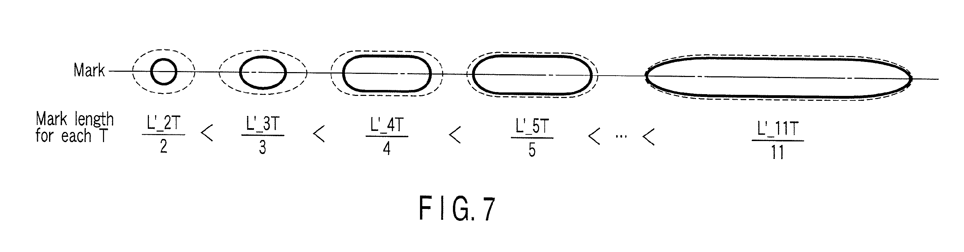

In the present embodiment, a mark (pit) 53 (a circle or ellipse indicated by a solid line) recorded on the disk is set to be smaller than a conventional mark 50 (an ellipse indicated by doted lines). The mark 50 has length calculated based on a reference clock. FIG. 7 is a view showing marks (solid-line circle and ellipses) of 2T to 11T formed according to the present embodiment and ellipses indicated by dotted lines indicate conventional marks. Below the respective marks, the actual mark lengths for each T are shown. For example, L' 2T indicates the length (diameter) of the 2T mark (solid-line circle) in the track direction on the left end and the actual mark length for each T is (L'_2T)/2. It is supposed that the wall angles of the marks are so set that the front-side and back-side wall angles will be set to 43° and the right-side and left-side wall angles will be set to 48° as shown in FIG. 5. On the disk according to the present embodiment, a mark is recorded while the actual mark length of the mark is set smaller than in the conventional case (the mark length for each T is set smaller) as the mark length calculated based on the reference clock is smaller.

In this case, the theoretical mark length of an nT mark calculated based on the reference clock T is set to $L_{nT}$, the actual length thereof is set to $L'_{nT}$. Further, n that satisfies the expression of $L_{nT} <$ (playback beam spot diameter of playback drive) is set to $n_1$ and n that satisfies the expression of $L_{nT} >$ (playback beam spot diameter of playback drive) is set to $n_2$. In this case, a disk according to the present embodiment satisfies the following expression.

$$L'_{n1T}/n_1 < L_{nT}/n$$

where $L_{nT}/n$ indicates the theoretical mark length for each T. More preferably, the following expression is set.

$$L'_{n1T}/n_1 < L'_{n2T}/n_2 \le L_{nT}/n$$

That is, if a pit has a smaller theoretical value of pit length, the actual dimension of the pit is set smaller than the theoretical value. Further, for the shortest mark

$n_0T$, the actual mark length $L'_{n0T}$ is set smaller than 0.6 times the mark length theoretical value $L_{n0T}$. That is, the actual dimensions of all of the marks are set equal to or smaller than the theoretical mark length and the actual dimension of a mark having a sizesmaller than at least the playback spot diameter is set extremely smaller than the theoretical mark length. By setting the actual shortest mark length equal to or smaller than 0.6 times the theoretical value (approximately 0.122 μm), the asymmetry of a playback signal is set to a smaller value and a disk manufactured by use of the next-generation master disk recording apparatus can be played back by use of a present HD DVD playback apparatus (player) without causing any problem. The minimum value of the magnification of the actual shortest mark length is x0.3 (approximately 61 nm). That is, even when the actual shortest mark length is set to 0.3 times the theoretical value, the amplitude of the playback signal thereof can be sufficiently large so as to be read by use of the present HD DVD playback apparatus.

The disk according to the present embodiment is manufactured based on a master disk manufactured by use of a master disk recording apparatus (exposure apparatus) having a sufficiently high resolution to record the shortest marks. The recording beam diameter used for master disk recording is approximately 0.9 times the shortest pit length theoretical value and the tilts of the walls of the pit can be made steep (the cross section of the pit is rectangular). Therefore, a disk with high density can be easily manufactured by using a recording beam whose beam diameter is equal to or smaller than 0.9 times the shortest pit length theoretical value. For example, in the case of an HD DVD master disk according to the present embodiment, the recording operation can be performed by use of a next-generation master disk recording apparatus of an electron beam recording system. As the result that the cross section of the pit is rectangular and the resolution becomes sufficiently high, the depths of recorded pits are uniformly set, and therefore, the quality of a playback signal becomes stable.

Further, as described before, according to the present embodiment, a disk with high recording density in comparison with the present HD DVD (recording capacity: 15 GB/layer) can be easily manufactured. In the case of the present HD DVD, the shortest mark length calculated based on the reference clock is set to 0.204 μm, but the theoretical shortest mark length is set to 0.17 μm when the recording capacity is increased to 18 GB/layer. In this case, the range of the theoretical shortest mark length $L_{n0T}$ is substantially set to 0.17 μm to 0.21 μm.

Further, in the present HD DVD playback apparatus, the diameter of the playback beam spot is suitably set to two to three times the theoretical shortest pit length to read the mark. Therefore, when the range of the theoretical shortest mark length $L_{n0T}$ is substantially set to 0.17 μm to 0.21 μm, a disk is played back by use of a laser light spot with the diameter of 0.34 μm (=0.17

μm × 2) to 0.63 μm (=0.21 μm × 3) by the optical disk playback apparatus.

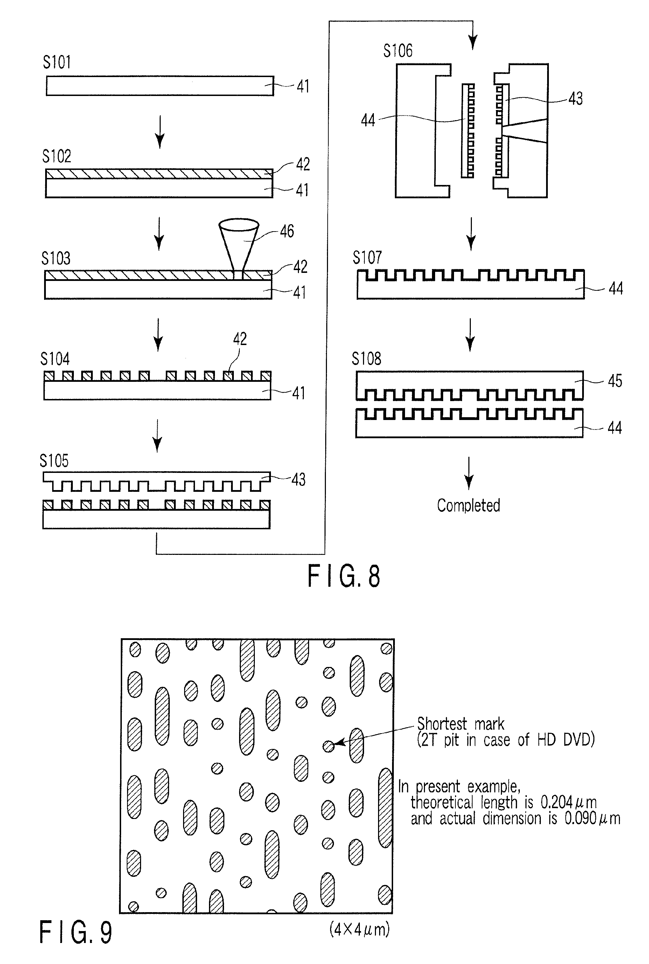

An optical disk manufacturing method is explained below with reference to FIG. 8. The flows of the optical disk manufacturing method using the conventional recording apparatus, the optical disk manufacturing method using the next-generation recording apparatus and the optical disk manufacturing method of this invention are basically the same. The different portions will be explained in detail.

First, a glass plate (an Si wafer in the case of electron beam recording) 41 whose surface is polished and cleaned is used as a master disk (step 101). Photoresist 42 is coated on the surface of the master disk (an organic material is spin-coated or an inorganic material is sputtered in the case of thermal recording) (step 102) and then information is recorded by exposing the surface by use of laser light or an electron beam 46 (step 103). Then, the exposed master disk is developed to form irregular portions of pits (step 104). By subjecting the master disk to a plating process, a stumper 43 with the thickness of approximately 300 μm is formed (step 105). In this case, the present invention contains a disk formation mold (stumper) having pits set to the above-described mark lengths. A resin (generally, polycarbonate) formation plate 44 is formed by injection molding with the stumper 43 used as a mold (step 106). After this, a reflection film and recording film are formed on the formation plate 44 (step 107), two formation plates are laminated (or a cover layer is formed on the formation plate) (step 108) and an optical disk is completed.

The master disk of the optical disk to which this invention is applied is formed by use of a next-generation high-density master disk recording apparatus (for example, thermal recording by a laser or electron beam recording in the case of an HD DVD master disk) in the master disk recording step of the step 103. The next-generation high-density master disk recording apparatus has a sufficiently high exposure resolution for the present HD DVD or BD and a reflection level (signal amplitude) of the shortest mark which compares favorably with that of a mark with the other mark length can be attained. However, as described before, the asymmetry becomes large if a mark is formed at substantially the same beam application timing as in the conventional case, and as a result, the correct playback operation cannot be performed by use of the PRML system in which, particularly, the signal level precision is important.

For example, in the case of an HD DVD, the theoretical shortest mark length is 0.204 μm, but the beam spot diameter can be narrowed to approximately 70 nm in the case of the electron beam recording apparatus (in contrast, a large spot diameter of several hundred nm as in the present master disk recording apparatus cannot be attained with the same apparatus configuration). When the beam spot diameter is thus narrowed, the exposure line speed and exposure time that do not give any influence on production can be realized.

However, when a mark of 0.204 μm is recorded by use of a spot of 70 nm, the resolution is sufficiently high, the tilts of the pit walls by electron beam exposure become steeper than those by the conventional beam exposure and the pit shapes shown in FIG. 3 can be attained. Therefore, in the playback operation by the PRML system, deterioration in the playback signal characteristic occurs (the asymmetry is enlarged). Therefore, in the present embodiment, as described before, the asymmetry is improved by setting the actual dimension of the mark (particularly, the shortest mark) that is smaller than the beam spot of the playback drive smaller than the conventional case. Thus, an ideal signal waveform can be attained when, particularly, the playback operation is performed by the PRML system.

Thus, in the optical disk according to the present embodiment, marks indicating information are formed of pit-form irregular portions and the actual shortest mark length is set according to the tilt angles (wall angles) of the pit wall surfaces. It is preferable to set the actual shortest mark length smaller as the wall angles are set larger (steeper) in comparison with the conventional case.

An optical disk that satisfies the requirement of the present invention is actually manufactured. A surface AFM (Atomic Force Microscope) image of the optical disk is shown in FIG. 9. The disk is an HD DVD-ROM disk whose recording density is 15 GB for each layer of the disk and the theoretical mark length of the shortest mark calculated based on the reference clock is 0.204 μm. For example, since the beam spot diameter of the master disk recording apparatus is 80 nm, the above problem first occurs and then the actual dimension of the mark length of the shortest mark is changed to solve the problem.

In this example, the actual dimension of the shortest mark length was set to 0.90 μm (0.44 times the theoretical mark length), and as a result, the asymmetry was set small (the central levels of the signal amplitudes of the respective mark lengths were uniformly set at the center) and a signal waveform that is ideal for the PRML playback system could be attained. The beam spot of the drive used for playback was 0.550 μm (wavelength: 405 nm, NA: 0.65).

As described above, if the mark length defined in this invention is used, a present optical disk such as an HD DVD or BD (whose density is relatively lower in comparison with the resolution of the next-generation master disk recording apparatus) can be manufactured by use of the next-generation master disk recording apparatus. The effect becomes particularly significant in an optical disk that plays back information by use of the PRML method.

As described above, according to the present embodiment of this invention, a playback signal waveform that is optimized for a signal process such as a PRML process can be attained, and at the same time, an old-generation low-density optical master disk can be recorded by use of the next-generation master disk recording apparatus in which the beam spot is narrowed for a next-generation high-density optical disk, and therefore, the operability of the apparatus can be enhanced.

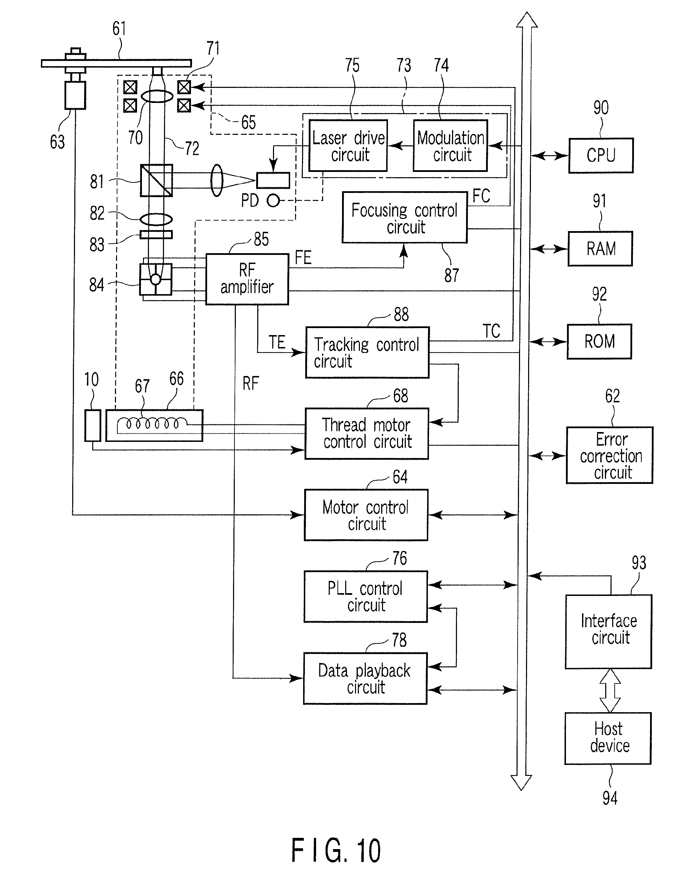

Next, an embodiment of an optical disk device that records and plays back information by use of an optical disk on which pits of the above-described shapes are formed is explained. FIG. 10 is a block diagram showing the configuration of an optical disk device according to the present embodiment.

An optical disk 61 is a read-only optical disk or an optical disk capable of recording user data. The optical disk 61 is rotated and driven by a spindle motor 63. The operation of recording or playing back information with respect to the optical disk 61 is performed by an optical pickup head (which is hereinafter referred to as a PUH) 65. The PUH 65 is connected with a thread motor 66 via a gear and the thread motor 66 is controlled by a thread motor control circuit 68.

A seek destination address of the PUH 65 is input from a CPU 90 to the thread motor control circuit 68 and the thread motor control circuit 68 controls the thread motor 66 based on the address. A permanent magnet is fixed in the thread motor 66 and a drive coil 67 is excited by the thread motor control circuit 68 to move the PUH 65 in a radial direction of the optical disk 61.

An objective lens 70 supported by a wire or leaf spring (not shown) is provided in the PUH 65. The objective lens 70 can be moved in a focusing direction (in the optical axis direction of the lens) by the driving operation of a drive coil 72 and can be moved in a tracking direction (in a direction perpendicular to the optical axis of the lens) by the driving operation of a drive coil 71.

Recording data is input to a laser drive circuit 75 via a modulation circuit 74 in a laser control circuit 73 and the laser drive circuit 75 drives a semiconductor laser 79 to emit laser light based on input data. Laser light emitted from the semiconductor laser 75 is applied onto the optical disk 61 via a collimator lens 80, half prism 81 and objective lens 70. Light reflected from the optical disk 61 is guided to a photodetector 84 via the objective lens 70, half prism 81, condenser lens 82 and cylindrical lens 83.

For example, the photodetector 84 is configured by four-divided photodetector cells and detection signals from the divided photodetector cells are output to an RF amplifier 85. The RF amplifier 85 synthesizes the signals from the photodetector cells and generates a focus error signal FE indicating an error with respect to a just focused position, a tracking error signal TE indicating an error between the beam spot center of laser light and the track center and an RF signal that is a total sum signal of the signals from the photodetector cells.

The focus error signal FE is supplied to a focusing control circuit 87. The focusing control circuit 87 generates a focus control signal FC according to the focus error signal FE. The focus control signal FC is supplied to the drive coil 72 for driving in the focusing direction and a focus servo operation is performed to always set laser light on a recording film of the optical disk 61 in a just focused state.

The tracking error signal TE is supplied to a tracking control circuit 88. The tracking control circuit 88 generates a tracking control signal TC according to the tracking error signal TE. The tracking control signal TC is supplied to the drive coil 72 for driving in the tracking direction and a tracking servo operation is performed to always trace laser light on a track formed on the optical disk 61.

By performing the above focus servo and tracking servo operations, a variation in the reflected light from a pit formed on the track of the optical disk 61 is reflected on the total sum signal RF of output signals of the photodetector cells of the photodetector 84. The signal is supplied to a data playback circuit 78. The data playback circuit 78 plays back recording data based on a playback clock signal from a PLL circuit 76.

When the objective lens 70 is controlled by the tracking control circuit 88, the thread motor 66 or PUH 65 is controlled by the thread motor control circuit 68 to set the objective lens 70 into a position near a preset position in the PUH 65.

The motor control circuit 64, thread motor control circuit 68, laser control circuit 73, PLL circuit 76, data playback circuit 78, focusing control circuit 87, tracking control circuit 88, error correction circuit 62 and the like are controlled by the CPU 90 via a bus 89. The CPU 90 generally controls the recording/playback apparatus according to an operation command supplied from a host device 94 via an interface circuit 93. Further, the CPU 90 uses a RAM 91 as a work area and performs a preset operation according to a program recorded in a ROM 92.

The data playback circuit 78 plays back information based on a binary-coding method in which the information playback signal waveform is sliced by use of threshold voltage and the sliced waveform is binary-coded or a PRML method in which the amplitude of the information playback signal waveform is converted into a multi-value and decoded.

Further, the diameter of a playback beam spot obtained by the objective lens 70 is preferably set to two to three times the theoretical shortest pit length. As described before, since the range of the theoretical shortest mark length $L_{n0T}$ is set to 0.17 $\mu$m to 0.21 $\mu$m in the optical disk according to the present embodiment, the optical disk playback apparatus plays back the optical disk by use of a laser light spot with the diameter of at least 0.34 $\mu$m to 0.63 $\mu$m.

The optical disk playback apparatus calculates a correct reference clock and plays back a signal based on the playback waveform of the optical disk of this application having marks shorter than the theoretical mark length calculated based on the reference clock. For example, when the mark length of the actual shortest mark $n_0T$ is set to $L'_{n0T}$, the optical disk playback apparatus plays back a signal based on a reference clock generated by setting the length ($n_0$: an integral number and "2" in the case of an HD DVD) larger than or equal to $(L'_{n0T}/n_0)$/0.6 as the length corresponding to one period. The length corresponding to one period is a distance by which the light beam spot traces (moves along) the disk recording surface during one clock period.

The above explanation is made only as one example of the present invention and does not limit the apparatus and method of this invention and various modifications may easily be made.

## Claims

1. An optical disk **characterized in that** actual shortest mark length recorded on the optical disk is not larger than $L_{n0T} \times 0.6$ when shortest mark length calculated based on a reference clock is $L_{n0T}$.

2. The optical disk according to claim 1, **characterized in that** the shortest mark length $L_{n0T}$ calculated based on the reference clock is set to 0.17 $\mu$m to 0.21 $\mu$m.

3. The optical disk according to claim 1, **characterized in that** the optical disk is configured to be played back by use of a laser light spot with a diameter of 0.34 to 0.63 $\mu$m.

4. The optical disk according to claim 1, **characterized in that** the optical disk is played back by use of a PRML system.

5. The optical disk according to claim 1, **characterized in that** the optical disk is a playback-only optical disk on which marks indicating information are formed of pit-form irregular portions.

6. The optical disk according to claim 5, **characterized in that** pit depths of all of pits formed on the optical disk are equal.

7. The optical disk according to claim 1, **characterized in that** a relation of $L'_{n1T}/n_1 < L_{nT}/n$ is set when theoretical mark length of an nT mark calculated based on the reference clock is set to $L_{nT}$. actual length thereof is set to $L'_{nT}$, n that satisfies an expression of $L_{nT} <$ (playback beam spot diameter of playback drive) is set to $n_1$.

8. The optical disk according to claim 1, **characterized in that** a relation of $L'_{n1T}/n_1 < L'_{n2T}/n_2 \leq L_{nT}/n$ is set when theoretical mark length of an nT mark calculated based on the reference clock is set to $L_{nT}$, actual length thereof is set to $L'_{nT}$, n that satisfies an expression of $L_{nT} <$ (playback beam spot diameter of playback drive) is set to $n_1$ and n that satisfies an expression of $L_{nT} >$ (playback beam spot diameter of playback drive) is set to $n_2$.

9.  The optical disk according to claim 1, **characterized in that** the optical disk is configured to include marks indicating information that are formed of pit-form irregular portions and the actual shortest mark length is set according to tilt angles of pit wall surfaces.

10. An optical disk mastering method which is a method for manufacturing a master disk of the optical disk described in claim 1, **characterized by** comprising:

    recording information on the master disk by use of a beam with a beam spot diameter that is not larger than $L_{n0T} \times 0.9$ when shortest mark length calculated based on a reference clock is $L_{n0T}$.

11. An optical disk playback apparatus configured to play back information recorded on an optical disk, **characterized in that** an information playback reference clock is generated by using length that is not smaller than $(L'_{n0T}/n_0)/0.6$ as length corresponding to a period of a reference clock when information is played back by use of a PRML system based on an optical disk playback signal, the period is set to T, a shortest mark recorded on the optical disk is set to $n_0T$ is and the mark length thereof is set to $L'_{n0T}$.

12. The optical disk playback apparatus according to claim 11, **characterized in that** marks recorded on the optical disk are played back by use of a laser light spot with a diameter of 0.34 to 0.63 $\mu$m.

FIG. 1A

10    11

FIG. 1B

12w

12

Laser light

$W_{2T}$   $W_{2T}$   $L_{2T}$   $W_{3T}$   $W_{MT}$   $A_{MT}$   $L_{MT}$   $A_{2T}$   $D$

FIG. 2

F I G. 3A

F I G. 3B

Laser light

F I G. 4

Wall angle $\theta$

| | Front-side and back-side wall angles of pit [°] | Right-side and left-side wall angles of pit [°] |
|---|---|---|
| Conventional master disk recording apparatus | 22 | 38 |
| Next-generation master disk recording apparatus | 43 | 48 |

## F I G. 5

50   51

## F I G. 6A

53

## F I G. 6B

Laser light

Mark

Mark length
for each T

$\dfrac{L'2T}{2}$ < $\dfrac{L'3T}{3}$ < $\dfrac{L'4T}{4}$ < $\dfrac{L'5T}{5}$ < ... < $\dfrac{L'11T}{11}$

FIG.7

S101 ────────────41

↓

S102 ════════════42
     ────────────41

↓

S103          46
     ════════════42
     ────────────41

↓

S104          42
     ────────────41

↓

S105          43
     ────────────

S106
     44        43

↓

S107 ⎍⎍⎍⎍⎍⎍⎍⎍⎍ 44

↓

S108 ⎍⎍⎍⎍⎍⎍⎍⎍⎍ 45
     ⎍⎍⎍⎍⎍⎍⎍⎍⎍ 44

↓

Completed

## FIG. 8

## FIG. 9

Shortest mark
(2T pit in case of HD DVD)

In present example,
theoretical length is 0.204 $\mu$m
and actual dimension is 0.090 $\mu$m

(4×4 $\mu$m)

F I G. 10

**European Patent Office**

**EUROPEAN SEARCH REPORT**

Application Number

EP 08 15 6107

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2004/071074 A1 (OOTERA YASUAKI [JP]) 15 April 2004 (2004-04-15) * the whole document * ----- | 1-11 | INV. G11B7/013 G11B7/26 |
| A | EP 1 028 413 A (SONY CORP [JP]) 16 August 2000 (2000-08-16) * paragraph [0016] - paragraph [0021] * ----- | 1-11 | |
| A | JP 2000 011453 A (SONY CORP) 14 January 2000 (2000-01-14) * the whole document * ----- | 1-11 | |
| A | EP 1 215 665 A (PIONEER CORP [JP]) 19 June 2002 (2002-06-19) * paragraph [0012] - paragraph [0015] * * figures 8a-10 * ----- | 1-11 | |

TECHNICAL FIELDS SEARCHED (IPC)

G11B

The present search report has been drawn up for all claims

| Place of search | Date of completion of the search | Examiner |
|---|---|---|
| The Hague | 15 July 2008 | Pacholec, Darek |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

& : member of the same patent family, corresponding
 document

EPO FORM 1503 03.82 (P04C01)

**ANNEX TO THE EUROPEAN SEARCH REPORT
ON EUROPEAN PATENT APPLICATION NO.**                     EP 08 15 6107

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2008

| Patent document cited in search report | Publication date | Patent family member(s) | | Publication date |
|---|---|---|---|---|
| US 2004071074 A1 | 15-04-2004 | CN | 1497560 A | 19-05-2004 |
| | | JP | 2004127468 A | 22-04-2004 |
| EP 1028413 A | 16-08-2000 | JP | 2000231745 A | 22-08-2000 |
| | | US | 6335916 B1 | 01-01-2002 |
| JP 2000011453 A | 14-01-2000 | NONE | | |
| EP 1215665 A | 19-06-2002 | CN | 1366303 A | 28-08-2002 |
| | | JP | 2002184040 A | 28-06-2002 |
| | | KR | 20020046986 A | 21-06-2002 |
| | | TW | 231496 B | 21-04-2005 |
| | | US | 2002080713 A1 | 27-06-2002 |

EPO FORM P0459

For more details about this annex : see Official Journal of the European Patent Office, No. 12/82

**EP 1 998 326 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004127468 A